(19) Europäisches Patentamt / European Patent Office / Office européen des brevets

(11) **EP 2 091 635 B1**

(12) **EUROPÄISCHE PATENTSCHRIFT**

(45) Veröffentlichungstag und Bekanntmachung des Hinweises auf die Patenterteilung:
**09.09.2020 Patentblatt 2020/37**

(21) Anmeldenummer: **07802342.1**

(22) Anmeldetag: **17.09.2007**

(51) Int Cl.:
$B01D\ 53/94^{(2006.01)}$   $B01J\ 35/04^{(2006.01)}$
$B01J\ 37/02^{(2006.01)}$   $B01J\ 23/00^{(2006.01)}$
$B01J\ 23/10^{(2006.01)}$   $B01J\ 27/04^{(2006.01)}$
$B01J\ 23/24^{(2006.01)}$   $B01J\ 23/30^{(2006.01)}$
$B01J\ 23/888^{(2006.01)}$

(86) Internationale Anmeldenummer:
**PCT/EP2007/008068**

(87) Internationale Veröffentlichungsnummer:
**WO 2008/049491 (02.05.2008 Gazette 2008/18)**

(54) **VANADIUMFREIER KATALYSATOR ZUR SELEKTIVEN KATALYTISCHEN REDUKTION UND VERFAHREN ZU SEINER HERSTELLUNG**

VANADIUM-FREE CATALYST FOR SELECTIVE CATALYTIC REDUCTION AND PROCESS FOR ITS PRODUCTION

CATALYSEUR SANS VANADIUM POUR LA RÉDUCTION SÉLECTIVE ET PROCÈDE DE SON PRODUCTION

(84) Benannte Vertragsstaaten:
**AT BE BG CH CY CZ DE DK EE ES FI FR GB GR HU IE IS IT LI LT LU LV MC MT NL PL PT RO SE SI SK TR**

(30) Priorität: **23.10.2006 EP 06022121**

(43) Veröffentlichungstag der Anmeldung:
**26.08.2009 Patentblatt 2009/35**

(73) Patentinhaber: **Umicore AG & Co. KG 63457 Hanau-Wolfgang (DE)**

(72) Erfinder:
• **ADELMANN, Katja 64297 Darmstadt (DE)**
• **SOEGER, Nicola 60385 Frankfurt am Main (DE)**
• **MUSSMANN, Lothar 63069 Offenbach (DE)**
• **PFEIFER, Marcus 42719 Solingen (DE)**
• **JESKE, Gerald 63543 Neuberg (DE)**

(56) Entgegenhaltungen:
**EP-A- 1 685 891    EP-A- 1 736 232**

• **SAIDINA AMIN ET AL: "SCR of NO with C3H6 in the presence of excess O2 over Cu/Ag/CeO2-ZrO2 catalyst" CHEMICAL ENGINEERING JOURNAL, ELSEVIER SEQUOIA, LAUSANNE, CH, Bd. 113, Nr. 1, 1. Oktober 2005 (2005-10-01), Seiten 13-25, XP005099578 ISSN: 1385-8947**
• **THOMAS ET AL: "On the promotional effect of Pd on the propene-assisted decomposition of NO on chlorinated Ce0.68Zr0.32O2" APPLIED CATALYSIS B: ENVIRONMENTAL, ELSEVIER, Bd. 63, Nr. 3-4, 31. März 2006 (2006-03-31), Seiten 201-214, XP005308674 ISSN: 0926-3373**
• **THOMAS ET AL: "Influence of the nature of the noble metal on the lean C3H6-assisted decomposition of NO on Ce0.68Zr0.32O2-supported catalysts" JOURNAL OF MOLECULAR CATALYSIS. A, CHEMICAL, ELSEVIER, AMSTERDAM, NL, Bd. 249, Nr. 1-2, 18. April 2006 (2006-04-18), Seiten 71-79, XP005388487 ISSN: 1381-1169**
• **PEREZ-HERNANDEZ ET AL: "NO reduction with CH4 or CO on Pt/ZrO2-CeO2 catalysts" CATALYSIS TODAY, ELSEVIER, Bd. 107-108, 30. Oktober 2005 (2005-10-30), Seiten 175-180, XP005122485 ISSN: 0920-5861**

**Beschreibung**

Die Erfindung betrifft einen neuen, vanadiumfreien Katalysator für die selektive katalytische Reduktion von Stickoxiden mit Ammoniak oder einer zu Ammoniak zersetzlichen Verbindung als Reduktionsmittel, der sich besonders zur Entfernung von Stickoxiden aus Abgasen von überwiegend mager betriebenen Verbrennungsmotoren in Kraftfahrzeugen eignet. Die Erfindung betrifft weiterhin ein Verfahren zur Herstellung eines katalytisch aktiven Materials für die selektive katalytische Reduktion von Stickoxiden.

Die Emissionen eines Kraftfahrzeugs können grundsätzlich in zwei Gruppen unterteilt werden. So bezeichnet der Begriff Rohemission Schadgase, die durch den Verbrennungsprozeß des Kraftstoffes im Motor direkt entstehen und bereits vor dem Passieren der Abgasreinigungseinrichtungen im Abgas enthalten sind. Als Sekundäremissionen werden Abgaskomponenten bezeichnet, die als Nebenprodukte in der Abgasreinigungsanlage entstehen können.

Abgase von Kraftfahrzeugen mit einem überwiegend mager betriebenem Verbrennungsmotor enthalten neben den üblichen Primäremissionen Kohlenmonoxid CO, Kohlenwasserstoffe HC und Stickoxide NOx einen relativ hohen Sauerstoffgehalt von bis zu 15 Vol.-%. Kohlenmonoxid und Kohlenwasserstoffe können durch Oxidation leicht unschädlich gemacht werden. Die Reduktion der Stickoxide zu Stickstoff ist wegen des hohen Sauerstoffgehaltes jedoch wesentlich schwieriger.

Ein bekanntes Verfahren zur Entfernung von Stickoxiden aus Abgasen in Gegenwart von Sauerstoff ist das Verfahren der selektiven katalytischen Reduktion (SCR-Verfahren; Selective Catalytic Reduction) mittels Ammoniak an einem geeigneten Katalysator, kurz als SCR-Katalysator bezeichnet. Bei diesem Verfahren werden die aus dem Abgas zu entfernenden Stickoxide mit Ammoniak zu Stickstoff und Wasser umgesetzt. Das als Reduktionsmittel verwendete Ammoniak kann durch Eindosierung einer zu Ammoniak zersetzlichen Verbindung wie beispielsweise Harnstoff, Ammoniumcarbamat oder Ammoniumformiat in den Abgasstrang und anschließende Hydrolyse verfügbar gemacht werden. Außerdem sind Abgasreinigungskonzepte für Kraftfahrzeuge bekannt, in denen Ammoniak während einer fetten Betriebsphase des Motors an einem vorgeschalteten Katalysator, zum Beispiel einem Stickoxidspeicherkatalysator, als Sekundäremission erzeugt und im SCR-Katalysator bis zum Verbrauchszeitpunkt während der mageren Betriebsphasen zwischengespeichert wird.

Der Einsatz in einem diskontinuierlich arbeitenden SCR-System, in dem das als Reduktionsmittel verwendete Ammoniak ausschließlich als Sekundäremission in der Abgasanlage erzeugt wird, erfordert SCR-Katalysatoren, deren Ammoniakspeicherfähigkeit ausreicht, um möglichst den gesamten Reduktionsmittelbedarf für die Abgasentstickung während der Magerphase vorzuhalten. Hierzu eignen sich insbesondere Zeolith-basierte SCR-Katalysatoren, wie sie aus zahlreichen Publikationen und Patentanmeldungen bekannt sind. Beispielsweise beschreibt die US 4,961,917 eine Methode zur Reduktion von Stickoxiden mit Ammoniak unter Verwendung eines Katalysators, der neben einem Zeolith mit definierten Eigenschaften Eisen und/oder Kupfer als Promotor enthält. Weitere SCR-Katalysatoren auf der Basis Übergangsmetall-ausgetauschter Zeolithe und Verfahren zur selektiven katalytischen Reduktion unter Verwendung solcher SCR-Katalysatoren sind beispielsweise beschrieben in der EP 1 495 804 A1, der US 6,914,026 B2 oder der EP 1 147 801 B1.

Für den Einsatz in Abgasreinigungsanlagen mit Dosiereinrichtungen für Harnstoff oder andere zu Ammoniak zersetzliche Verbindungen, die die kontinuierliche Versorgung des Systems mit Reduktionsmittel ermöglichen, ist es nicht erforderlich, daß der SCR-Katalysator eine große Ammoniakspeicherkapazität aufweist. Dementsprechend ist man bestrebt, den Einsatz Zeolith-basierter SCR-Katalysatoren zu vermeiden, da diese wegen der hohen Herstellungspreise für Zeolithverbindungen sehr teuer sind.

Hierfür eignen sich SCR-Katalysatoren, die Vanadiumoxid neben Titandioxid oder Wolframoxid oder Mischungen davon enthalten. Beispielsweise beschreibt die EP 0 385 164 B1 einen solchen Katalysator der neben Titandioxid mindestens ein Oxid von Wolfram, Silizium, Bor, Aluminium, Phosphor, Zirkonium, Barium, Yttrium, Lanthan oder Cer, sowie mindestens ein Oxid von Vanadium, Niob, Molybdän, Eisen oder Kupfer enthält und der als Formkörper durch Verpressung beziehungsweise Extrusion der Komponenten gegebenenfalls nach Zusatz geeigneter Hilfsstoffe hergestellt wird. Die EP 1 153 648 A1 beschreibt einen strukturierten SCR-Katalysator, der unter einer Hydrolysekatalysator-Beschichtung eine Reduktionsbeschichtung enthält, deren Zusammensetzung der aus der EP 0 385 164 B1 bekannten Rezeptur entspricht. EP 0 246 859 beschreibt einen SCR-Katalysator, der Vanadium aufgebracht auf eine Mischung von Ceroxid und Aluminiumoxid enthält.

Ein wesentliches Problem bei der Verwendung der Vanadium-haltigen SCR-Katalysatoren zur Reinigung der Abgase von Kraftfahrzeugen ist die mögliche Emission von flüchtigen, toxischen Vanadiumverbindungen bei höheren Abgastemperaturen, wo-durch mit Beeinträchtigungen von Mensch und Umwelt gerechnet werden muß. Dementsprechend sinkt die Akzeptanz von Vanadium-haltigen Autoabgaskatalysatoren am Markt.

Bemühungen, Vanadium-freie SCR-Katalysatoren zur Verfügung zu stellen, die eine kostengünstige Alternative zu hochpreisigen, Zeolith-basierten Systemen darstellen, gibt es bereits seit längerem.

Beispielsweise beschreibt US 4,798,817 einen SCR-Katalysator, der im wesentlichen aus 0,5 bis 50 % Eisensulfat aufgebracht auf einer Mischung von 2 bis 60 % Ceroxid und Aluminiumoxid enthält. US 4,780,445 beschreibt einen SCR-Katalysator mit 0,1 bis 25 % Nickelsulfat oder Mangansulfat oder Mischungen davon aufgebracht auf einer Mischung von 2 bis 60 % Ceroxid und Aluminiumoxid.

JP 2005-238195 bzw. EP 1 736 232 beschreibt ein Katalysatorsystem zur Entfernung von Stickoxiden enthaltend einen ersten Reaktionsteil zur Denitrierung durch Reaktion von Stickoxiden mit Ammoniak und einen zweiten Reaktionsteil zur Oxidation von überschüssigem Ammoniak, worin der erste Reaktionsteil einen ersten Katalysator enthält, der als aktive Komponente mindestens ein komplexes Oxid enthaltend zwei oder mehr Oxide ausgewählt aus der Gruppe bestehend aus Siliziumoxid, Aluminiumoxid, Titanoxid, Zirkonoxid, und Wolframoxid, und ein Selten-Erd-Metall oder Übergangsmetall ausgenommen Cu, Co, Ni, Mn, Cr und V enthält.

Apostolescu et al. beschreiben in Appl. Catal. B: Environmental 62 (2006) 104 Untersuchungen an SCR-Pulverkatalysatoren aus $Fe_2O_3/ZrO_2$ mit $WO_3$-Dotierung im synthetischen Modellabgas.

Die bekannten Vanadium- und Zeolith-freien SCR-Katalysatoren sind zum Teil kompliziert zusammengesetzt, schwierig herzustellen und/oder genügen nicht den gestiegenen Anforderungen an Aktivität und Alterungsstabilität für den Einsatz in Kraftfahrzeugen.

Es ist daher Aufgabe der vorliegenden Erfindung, einen Vanadium-freien, im Vergleich zu Zeolith-basierten Systemen kostengünstigen und mit einfachen Mitteln herstellbaren SCR-Katalysator zur Verfügung zu stellen, der sich gegenüber den bisher bekannten Systemen durch hohe katalytische Aktivität und gute Alterungsstabilität auszeichnet und der sich insbesondere zur Entfernung von Stickoxiden aus dem Abgas überwiegend mager betriebener Verbrennungsmotoren in Kraftfahrzeugen mit kontinuierlichem SCR-System einschließlich einer Dosiereinrichtung für Ammoniak oder eine zu Ammoniak zersetzliche Verbindung eignet.

Diese Aufgabe wird durch ein Verfahren zur Herstellung eines katalytisch aktiven Materials für die selektive katalytische Reduktion von Stickoxiden mit Ammoniak gemäß Anspruch sowie ein katalytisch aktives Material erhältlich durch dieses Verfahren gemäß Anspruch 9 gelöst, wobei die katalytisch aktive Beschichtung vollständig oder teilweise aus einem homogenen Cer-Zirkon-Mischoxid besteht, welches 10 bis 90 Gew.-% Ceroxid bezogen auf das Gesamtgewicht des homogenen Cer-Zirkon-Mischoxids enthält und welches durch Einbringen eines Übergangsmetalls ausgewählt aus der Gruppe bestehend aus Chrom, Molybdän, Wolfram und Mischungen davon für die SCR-Reaktion aktiviert ist.

Unter einem homogenen Cer-Zirkon-Mischoxid (kurz: Cer-Zirkon-Mischoxid) im Sinne dieser Schrift wird ein oxidisches, festes Pulvermaterial verstanden, welches wenigstens aus den zwei Komponenten Ceroxid und Zirkonoxid besteht. Die Komponenten bilden eine Mischung auf atomarer Ebene. Dieser Begriff schließt physikalische Mischungen von Ceroxid-haltigen Pulvern mit Zirkonoxid-haltigen Pulvern aus. Die Zusammensetzung solcher Mischoxide ist im Rahmen der Meßgenauigkeit über den Querschnitt eines Pulverkorns konstant, das heißt homogen. Materialien dieser Art werden in der Literatur gelegentlich auch als "feste Lösungen" bezeichnet.

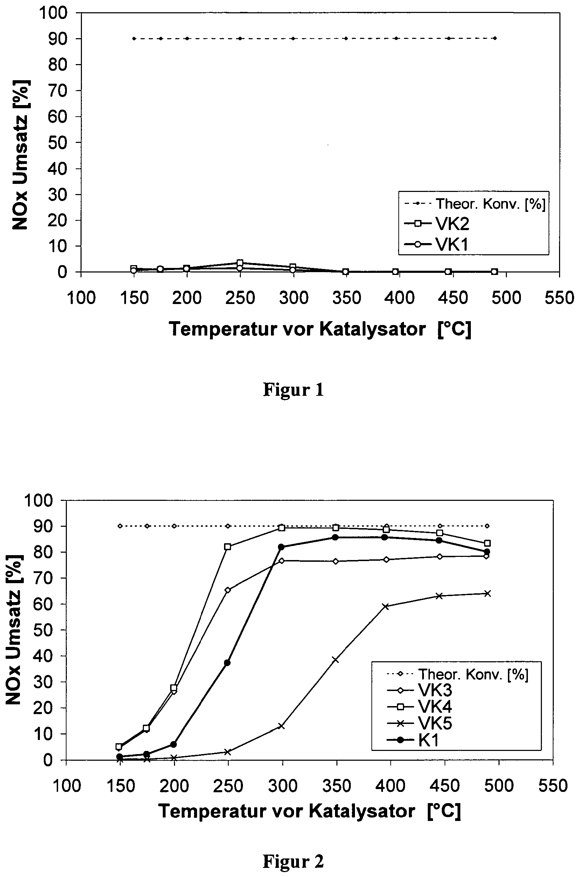

In unbehandelten Zustand zeigen solche Cer-Zirkon-Mischoxide keine signifikante katalytische Aktivität in der SCR-Reaktion, wie die in Figur 1 gezeigten Aktivitätsdaten zweier exemplarisch ausgewählter, unbehandelter Cer-Zirkon-Mischoxide mit 86 Gew.-% Ceroxid (VK1 aus Vergleichsbeispiel 1) bzw. 48 Gew.-% Ceroxid (VK2 aus Vergleichsbeispiel 2), jeweils bezogen auf das Gesamtgewicht des homogenen Cer-Zirkon-Mischoxids, belegen. Untersuchungen der Erfinder haben zu dem überraschenden Ergebnis geführt, daß ein homogenes Cer-Zirkon-Oxid, wenn es in geeigneter Weise vorbehandelt wird, bessere SCR-Aktivität zeigt, als herkömmliche SCR-Katalysatoren nach dem Stand der Technik. Homogene Cer-Zirkon-Mischoxide, die mit einer der nachfolgend beschriebenen Methoden behandelt wurden, sind gemeint, wenn im Rahmen dieser Schrift von für die SCR-Reaktion aktiviertem Cer-Zirkon-Mischoxid die Rede ist.

Die Aktivierung der Cer-Zirkon-Mischoxide für die SCR-Reaktion erfolgt durch das Einbringen eines Übergangsmetalls ausgewählt aus der Gruppe bestehend aus Chrom, Molybdän, Wolfram und Mischungen davon und optional durch das zusätzliche Einbringen von Schwefel. Dabei werden die aktivierend wirkenden Komponenten in das oxidische Gerüst des Cer-Zirkon-Mischoxids integriert. Durch eine Kombination der beiden Aktivierungsmaßnahmen können besonders vorteilhafte Ausführungsformen erhalten werden. Dabei erfolgt die Einbringung von Schwefel und die Einbringung des Übergangsmetalls in getrennten, nacheinander zu durchlaufenden Verfahrensschritten.

Das Einbringen von Schwefel kann dadurch erfolgen, daß das zu aktivierende Cer-Zirkon-Mischoxid mit einer Gasmischung behandelt wird, die neben Sauerstoff Schwefeldioxid $SO_2$ enthält. Die Behandlung erfolgt bei Temperaturen zwischen 150 und 800°C, bevorzugt zwischen 250 und 650°C, besonders bevorzugt zwischen 300 und 400°C. Eine geeignete Gasmischung enthält neben 0,15 bis 15 Vol.-% Sauerstoff 5 bis 50000 ppm Schwefeldioxid, bevorzugt 5 bis 500 ppm Schwefeldioxd, besonders bevorzugt 10 bis 100 ppm $SO_2$. Außerdem kann die Gasmischung bis zu 20 Vol.-% Wasser enthalten.

Das Einbringen von Schwefel kann auch durch eine Behandlung des Cer-Zirkon-Mischoxids mit verdünnter Schwefelsäure bei Raumtemperatur oder leicht erhöhter Temperatur bis 80°C und anschließender Trocknung erfolgen. Die Trocknung kann bei Temperaturen zwischen 80 und 150°C an Luft durchgeführt werden.

Die in das aktivierte Cer-Zirkon-Mischoxid eingebrachte Menge Schwefel ist von Art und Dauer der Behandlung abhängig. Ein für die SCR-Reaktion aktiviertes Cer-Zirkon-Mischoxid enthält 0,01 bis 5 Gew.-% Schwefel, bevorzugt 0,02 bis 3 Gew.-% Schwefel, bezogen auf das Gesamtgewicht des aktivierten Cer-Zirkon-Mischoxids.

Das Cer-Zirkon-Mischoxid wird durch Einbringen eines Übergangsmetalls ausgewählt aus der Gruppe bestehend aus Chrom, Molybdän, Wolfram und Mischungen davon für die SCR-Reaktion aktiviert. Hierzu wird das Cer-Zirkon-Mischoxid mit einer wässrigen Lösung einer Verbindung von Chrom, Molybdän, Wolfram oder Mischungen davon imprägniert, wobei die Lösungsmenge so gewählt wird, daß das Cer-Zirkon-Mischoxidpulver porenfüllend befeuchtet wird, seine Rieselfähigkeit jedoch behält. Anschließend erfolgt eine Trocknung des Pulvers bei 300 bis 700°C an Luft über die Dauer von 0,5 bis 5 Stunden, wobei das Übergangsmetall im Cer-Zirkon-Mischoxid thermisch fixiert wird. Der Vorgang wird gegebenenfalls wiederholt, bis im derart hergestellten Cer-Zirkon-Mischoxid nach Trocknung 2 bis 20 Gew.-%, bevorzugt 5 bis 15 Gew.-% von Chrom, Molybdän, Wolfram oder Mischungen davon bezogen auf das Gesamtgewicht des aktivierten Cer-Zirkon-Mischoxids enthalten sind. Die angegebene Vorgehensweise stellt sicher, daß das Übergangsmetall in hochdisperser Form im Cer-Zirkon-Oxid verteilt wird. Dies ist Voraussetzung für eine wirkungsvolle Aktivierung des Cer-Zirkon-Mischoxids.

Besonders gut für die SCR-Reaktion aktivierte und alterungsstabile Cer-Zirkon-Mischoxide erhält man, wenn zusätzlich ein Übergangsmetall ausgewählt aus der Gruppe bestehend aus Mangan, Eisen, Cobalt, Nickel, Kupfer, Ruthenium, Rhodium, Palladium, Silber, Iridium, Platin oder Gold oder Mischungen davon als Promotor eingesetzt wird. Das zusätzliche Übergangsmetall kann im gleichen Verfahren eingebracht werden, mit dem auch die Aktivierung mit Chrom, Molybdän oder Wolfram erfolgt. Insbesondere können die als Promotoren eingesetzten Übergangsmetalle der Chrom, Molybdän, Wolfram oder Mischungen davon enthaltenden Lösung zugesetzt werden und mit dem aktivierend wirkenden Übergangsmetall im selben Verfahrensschritt aufgebracht werden. Das resultierende, aktivierte Cer-Zirkon-Mischoxid weist bevorzugt einen Gehalt von Mangan, Eisen, Cobalt, Nickel, Kupfer, Ruthenium, Rhodium, Palladium, Silber, Iridium, Platin oder Gold oder Mischungen davon von 0,1 bis 10 Gew.-% auf, bevorzugt 0,5 bis 5 Gew.-%, jeweils bezogen auf das Gesamtgewicht des aktivierten Cer-Zirkon-Mischoxids.

Besonders bevorzugte Ausführungsformen des aktivierten Cer-Zirkon-Mischoxids enthalten 0,02 bis 3 Gew.-% Schwefel und/oder 5 bis 15 Gew.-% Molybdän oder Wolfram und 0,5 bis 3 Gew.-% Eisen oder Kupfer, jeweils bezogen auf dessen Gesamtgewicht.

Das beschriebene Verfahren ist gut geeignet für die Aktivierung von homogenen Cer-Zirkon-Mischoxiden für die SCR-Reaktion, wenn diese 10 - 90 Gew.-% Cer(IV)oxid, bezogen auf das Gesamtgewicht des homogenen Cer-Zirkon-Mischoxids enthalten. Bevorzugt eingesetzt werden homogene Cer-Zirkon-Mischoxide mit einer BET-Oberfläche von mehr als 50 $m^2$/g und einem Cer(IV)-oxid-Gehalt von 40 - 90 Gew.-%, besonders bevorzugt solche mit 45 - 55 % $CeO_2$. Die eingesetzten Cer-Zirkon-Mischoxide können mit Selten-Erd-Metallen dotiert sein und 1 bis 9 Gew.-% Selten-Erd-Oxid bezogen auf das Gesamtgewicht des homogenen Cer-Zirkon-Mischoxids enthalten. Dabei sind Selten-Erd-Oxide von Scandium, Yttrium, Lanthan, Praseodym, Neodym, Samarium, Europium, Gadolinium oder Mischungen davon besonders bevorzugt.

Wie bereits erwähnt, kann eine Kombination aus der Einbringung von Schwefel und der Einbringung von Übergangsmetall zu besonders vorteilhaften Ausführungsformen führen. Dazu kann zum einen in ein übergangsmetallhaltiges homogenes Cer-Zirkon-Mischoxid durch Behandlung mit einer $SO_2$ und Sauerstoff-haltigen Gasmischung oder durch Behandlung mit verdünnter Schwefelsäure und anschließende Trocknung Schwefel eingebracht werden. Das Übergangsmetall, das im Cer-Zirkon-Mischoxid enthalten ist, kann eines ausgewählt aus der Gruppe bestehend aus Chrom, Molybdän, Wolfram, Mangan, Eisen, Cobalt, Nickel, Kupfer, Ruthenium, Rhodium, Palladium, Silber, Iridium, Platin oder Gold sein, oder Kombinationen davon. Zum anderen kann in ein bereits schwefelhaltiges, homogenes Cer-Zirkon-Mischoxid ein Übergangsmetall nach dem beschriebenen Verfahren eingebracht werden. Die Abfolge der Verfahrensschritte führt zu Ausführungsformen des Katalysators mit unterschiedlicher chemischer Zusammensetzung. Welche Abfolge der Verfahrensschritte zu der insgesamt vorteilhafteren Aktivierung des Cer-Zirkon-Mischoxids führt, ist abhängig vom als Ausgangsmaterial gewählten homogenen Cer-Zirkon-Mischoxid und vom zur Aktivierung eingesetzen Übergangsmetalloxid. Hierin liegt die Optimierungsaufgabe für die letztlich aus dem aktivierten Cer-Zirkon-Mischoxid herzustellenden Katalysatoren im Hinblick auf die jeweilige Zielapplikation.

Wird ein in der beschriebenen Weise für die SCR-Reaktion aktiviertes Cer-Zirkon-Mischoxid auf einen inerten Tragkörper aufgebracht, so erhält man einen Katalysator für die selektive katalytische Reduktion von Stickoxiden mit Ammoniak oder einer Ammoniak zersetzlichen Verbindung. Der Tragkörper kann aus Keramik oder Metall bestehen. Wird ein keramischer Durchflußwabenkörper oder ein keramisches Wandflußfiltersubstrat verwendet, so erhält man einen SCR-Katalysator, der sich besonders gut für die Entfernung von Stickoxiden aus dem Abgas von überwiegend mager betriebenen Verbrennungsmotoren in Kraftfahrzeugen eignet. Dabei kann der Tragkörper ganz oder nur teilweise mit einem aktivierten Cer-Zirkon-Mischoxid beschichtet sein. Eine vollständige Beschichtung des Tragkörpers wird immer dann gewählt, wenn in der Abgasanlage des Fahrzeuges, für das der Katalysator bestimmt ist, ausreichend Bauraum vorhanden ist, um auf der Anströmseite einen zusätzlichen Hydrolysekatalysator und auf der Abströmseite einen zusätzlichen Ammoniak-Sperrkatalysator anzuordnen. In einer solchen Anordnung hat der Hydrolysekatalysator die Aufgabe, eine zu Ammoniak zersetzliche Verbindung, die in den Abgasstrang eindosiert wird, unter Freisetzung von Ammoniak zu zersetzen. Ein Ammoniak-Sperrkatalysator dient dazu, in bestimmten Betriebspunkten durch den SCR-Katalysator durchbrechendes, überschüssiges Ammoniak zu Stickstoff zu oxidieren und so dessen Emission in die Umwelt zu verhindern. Ist der Bauraum nicht ausreichend, so kann der Hydrolysekatalysator auf die Beschichtung mit aktiviertem Cer-Zirkon-Oxid aufgebracht werden, wobei die gesamte Länge des Tragkörpers ausgenutzt werden kann. Ebenso kann die Beschichtung mit dem erfindungsgemäßen Cer-Zirkon-Mischoxid nur auf einem Teil des Tragkörpers aufgebracht sein, während in einer gezonten Anordnung der Beschichtung entweder anströmseitig eine Hydrolysekatalysatorbeschichtung und/oder abströmseitig eine Ammoniak-Sperrkatalysator-Beschichtung und/oder eine weitere SCR-Katalysatorbeschichtung aufgebracht sein kann.

SCR-Katalysatoren, die durch vollständige oder teilweise Beschichtung eines inerten Tragkörpers mit einem erfindungsgemäßen, für die SCR-Reaktion aktivierten Cer-Zirkon-Mischoxid, das aus einem homogenen Cer-Zirkon-Mischoxid enthaltend 10 bis 90 Gew.-% Ceroxid, bevorzugt 40 bis 90 Gew.-%, besonders bevorzugt 45 bis 55 Gew.-% Ceroxid, jeweils bezogen auf das Gesamtgewicht des homogenen Cer-Zirkon-Mischoxids, hergestellt werden und ebenfalls Gegenstand dieser Erfindung sind, enthalten in ihren bevorzugten Ausführungsformen 1 bis 9 Gew.-% Selten-Erd-Metalloxid bezogen auf das Gesamtgewicht des homogenen Cer-Zirkon-Mischoxids. Dabei besteht das Selten-Erd-Oxid aus einem Oxid eines Metalls ausgewählt aus der Gruppe Scandium, Yttrium, Lanthan, Praseodym, Neodym, Samarium, Europium und Gadolinium oder Mischungen davon.

Das im erfindungsgemäßen Katalysator enthaltene Cer-Zirkon-Mischoxid, das durch Einbringen von Schwefel und/oder Übergangsmetall aktiviert wurde, enthält 0,01 bis 5 Gew.-%, bevorzugt 0,02 bis 3 Gew.-% Schwefel und/oder 2 bis 20 Gew.-%, bevorzugt 5 bis 15 Gew.-% Chrom, Molybdän, Wolfram oder Mischungen davon, besonders bevorzugt Molybdän und/oder Wolfram. Die Mengenangaben sind jeweils bezogen auf das Gesamtgewicht des aktivierten Cer-Zirkon-Mischoxids. Besonders bevorzugte Ausführungsformen enthalten außerdem 0,1 bis 10 Gew.-%, bevorzugt 0,5 bis 5 Gew.-% eines Übergangsmetalls ausgewählt aus der Gruppe Mangan, Eisen, Cobalt, Nickel, Kupfer, Ruthenium, Rhodium, Palladium, Silber, Iridium, Platin, Gold oder Mischungen davon, besonders bevorzugt 0,3 bis 3 Gew.-% Eisen oder Kupfer, das als Promotor wirkt.

Mit einem solchen Katalysator liegt eine kostengünstige und vanadiumfreie Alternative zu Zeolith-basierten SCR-Katalysatoren vor, wobei sich die erfindungsgemäßen Katalysatoren durch sehr gute SCR-Aktivität bei den Anforderungen entsprechender Alterungsstabilität unter hydrothermalen Bedingungen auszeichnen.

Die folgenden Beispiele, Vergleichsbeispiele und Figuren sollen die Erfindung näher erläutern.

**Figur 1:** Stickoxid-Umsatz von unbehandelten, nicht aktivierten homogenen Cer-Zirkon-Mischoxiden enthaltend 86 Gew.-% Ceroxid (VK1) bzw. 48 Gew.-% Ceroxid (VK2), bezogen auf das Gesamtgewicht des homogenen Cer-Zirkon-Mischoxid.

**Figur 2:** Stickoxid-Umsatz eines Katalysators (K1), der ein durch Einbringen von Schwefel für die SCR-Reaktion aktiviertes, Cer-reiches Cer-Zirkon-Mischoxid (86 Gew.-% Ceroxid bezogen auf das Gesamtgewicht des homogenen Cer-Zirkon-Mischoxids) enthält, im Vergleich zur SCR-Aktivität herkömmlicher SCR-Katalysatoren (VK3: Zeolith-basiert; VK4: Vanadiumbasiert; VK5: $Fe/W/ZrO_2$)

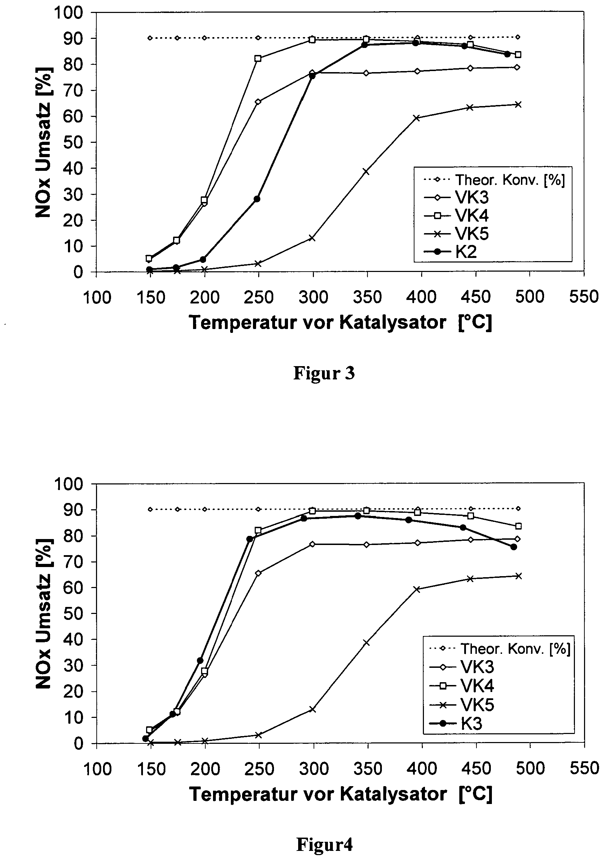

**Figur 3:** Stickoxid-Umsatz eines Katalysators (K2), der ein durch Einbringen von Schwefel für die SCR-Reaktion aktiviertes Cer-Zirkon-Mischoxid (enthält 48 Gew.-% Ceroxid bezogen auf das Gesamtgewicht des homogenen Cer-Zirkon-Mischoxids) enthält, im Vergleich zur SCR-Aktivität herkömmlicher SCR-Katalysatoren (VK3: Zeolith-basiert; VK4: Vanadiumbasiert; VK5: $Fe/W/ZrO_2$)

**Figur 4:** Stickoxid-Umsatz eines erfindungsgemäßen Katalysators (K3), der ein durch Einbringen von Wolfram für die SCR-Reaktion aktiviertes homogenes Cer-Zirkon-Mischoxid enthält, im Vergleich zur SCR-Aktivität herkömmlicher SCR-Katalysatoren (VK3: Zeolith-basiert; VK4: Vanadium-basiert; VK5: $Fe/W/ZrO_2$)

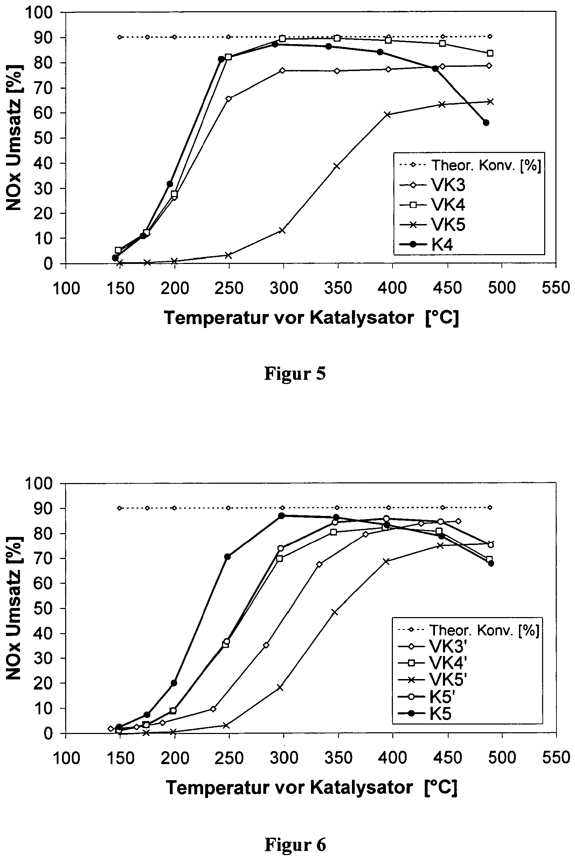

**Figur 5:** Stickoxid-Umsatz eines erfindungsgemäßen Katalysators (K4), der ein durch Einbringen von Eisen und Wolfram für die SCR-Reaktion aktiviertes homogenes Cer-Zirkon-Mischoxid enthält, im Vergleich zur SCR-Aktivität herkömmlicher SCR-Katalysatoren (VK3: Zeolith-basiert; VK4: Vanadiumbasiert; VK5: $Fe/W/ZrO_2$)

**Figur 6:** Stickoxid-Umsatz eines erfindungsgemäßen Katalysators, der ein durch Einbringen von Eisen und Wolfram für die SCR-Reaktion aktiviertes homogenes Cer-Zirkon-Mischoxid enthält, im frisch hergestellten Zustand (K5) und nach hydrothermaler, synthetischer Alterung (K5') im Vergleich zur SCR-Aktivität herkömmlicher SCR-Katalysatoren nach hydrothermaler Alterung (VK3': Zeolith-basiert; VK4': Vanadium-basiert; VK5': $Fe/W/ZrO_2$)

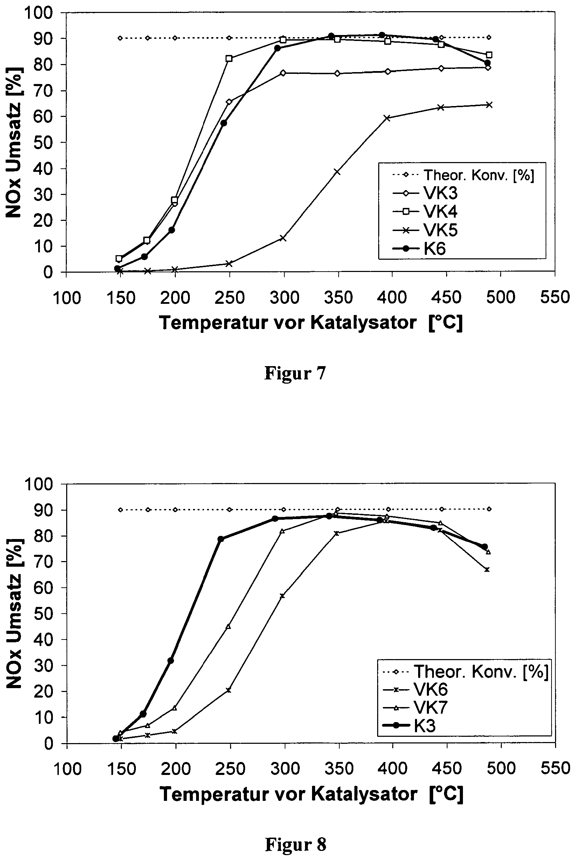

**Figur 7:** Stickoxid-Umsatz eines erfindungsgemäßen Katalysators (K6), der ein durch Einbringen von Eisen, Wolfram und Schwefel für die SCR-Reaktion aktiviertes homogenes Cer-Zirkon-Mischoxid enthält, im Vergleich zur SCR-Aktivität herkömmlicher SCR-Katalysatoren (VK3: Zeolith-basiert; VK4: Vanadium-basiert; VK5: $Fe/W/ZrO_2$)

**Figur 8:** Stickoxid-Umsatz eines erfindungsgemäßen Katalysators im frisch hergestellen Zustand (K3), der ein durch Einbringen von Wolfram für die SCR-Reaktion aktiviertes homogenes Cer-Zirkon-Mischoxid (48 Gew.-% Ceroxid bezogen auf das Gesamtgewicht des homogenen Cer-Zirkon-Mischoxids) enthält, im Vergleich zu herkömmlichen SCR-Katalysatoren, die Wolframoxid, Ceroxid und Zirkonoxid enthalten (VK6: $Ce\{ZrO_2-WO_3\}$; VK7: $W\{CeO_2-ZrO_2\}$)

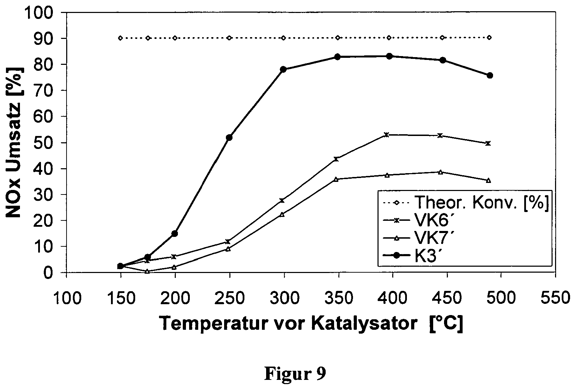

**Figur 9:** Stickoxid-Umsatz eines erfindungsgemäßen Katalysators nach hydrothermaler, synthetischer Alterung (K3'), der ein durch Einbringen von Wolfram für die SCR-Reaktion aktiviertes homogenes Cer-Zirkon-Mischoxid (48 Gew.-% Ceroxid bezogen auf das Gesamtgewicht des homogenen Cer-Zirkon-Mischoxids) enthält, im Vergleich zu herkömmlichen SCR-Katalysatoren, die Wolframoxid, Ceroxid und Zirkonoxid enthalten (VK6: $Ce\{ZrO_2\text{-}WO_3\}$; VK7: $W\{CeO_2\text{-}ZrO_2\}$)

**Untersuchung des Stickoxid-Umsatzes als Maß für die SCR-Aktivität:**

Alle in den nachstehend beschriebenen Beispielen hergestellten Cer-Zirkon-Mischoxide wurden in Wasser suspendiert, gemahlen und auf einen keramischen Wabenkörper mit einem Volumen von 0,5 L und einer Zellzahl von 62 Zellen pro Quadratzentimeter bei einer Wandstärke von 0,17 mm aufgebracht. Nach Kalzination des Wabenkörpers bei 500°C für die Dauer von zwei Stunden in Luft wurden dem beschichteten Wabenkörper zylinderförmige Bohrkerne für die Testung in einer Modellgasanlage mit einem Durchmesser von 25,4 mm und einer Länge von 76,2 mm entnommen.

Die Testung erfolgte in einer Labor-Modellgasanlage unter den folgenden Bedingungen.

| Zusammensetzung des Modellgases | |
|---|---|
| NO [Vol.-ppm]: | 500 |
| $NH_3$ [Vol.-ppm]: | 450 |
| $O_2$[Vol.-%]: | 5 |
| $H_2O$ [Vol.-%] | 1,3 |
| $N_2$: | Rest |
| **Allgemeine Testbedingungen** | |
| Raumgeschwindigkeit [$h^{-1}$]: | 30.000 |
| Temperatur [°C]: | 500; 450; 400; 350; 300; 250; 200; 175; 150 |
| Konditionierung vor Meßbeginn: | Modellgas-Atmosphäre; 600°C; einige Minuten |

Während der Messung wurden die Stickoxid-Konzentrationen des Modellabgases nach Katalysator mit einer geeigneten Analytik erfasst. Aus den bekannten, dosierten Stickoxid-Gehalten, die während der Konditionierung zu Beginn des jeweiligen Prüflaufs mit einer Vor-Katalysator-Abgasanalytik verifiziert wurden, und den gemessenen Stickoxid-Gehalten nach Katalysator wurde der Stickoxid-Umsatz über den Katalysator für jeden Temperaturmeßpunkt wie folgt berechnet:

$$U_{NO_x}[\%] \;=\; 1 - \frac{c_{Ausgang}(NO_x)}{c_{Eingang}(NO_x)} \cdot 100$$

mit

$$c_{Eingang/Ausgang}(NO_x) = c_{Ein/Aus}(NO) + c_{Ein/Aus}(NO_2) + c_{Ei/Aus}(N_2O) \;...$$

Die erhaltenen Stickoxid-Umsatz-Werte $U_{NOx}$ [%] wurden zur Beurteilung der SCR-Aktivität der untersuchten Materialien als Funktion der vor Katalysator gemessenen Temperatur aufgetragen.

**Vergleichsbeispiel 1:**

Ein homogenes Cer-Zirkon-Mischoxid, das 86 Gew.-% Ceroxid und 4 Gew.-% Lanthanoxid bezogen auf sein Gesamtgewicht enthielt, wurde in Wasser suspendiert, gemahlen und auf einen keramischen Wabenkörper mit einem Volumen von 0,5 L und einer Zellzahl von 62 Zellen pro Quadratzentimeter bei einer Wandstärke von 0,17 mm aufgebracht. Nach Kalzination des Wabenkörpers bei 500°C für die Dauer von zwei Stunden in Luft wurde dem so hergestellten Vergleichskatalysator ein Bohrkern VK1 für die Testung in der Modellgasanlage entnommen und dessen Stickoxid-Umsatz untersucht.

**Vergleichsbeispiel 2:**

Ein homogenes Cer-Zirkon-Mischoxid, das 48 Gew.-% Ceroxid bezogen auf sein Gesamtgewicht enthielt, wurde in Wasser suspendiert, gemahlen und auf einen keramischen Wabenkörper mit einem Volumen von 0,5 L und einer Zellzahl von 62 Zellen pro Quadratzentimeter bei einer Wandstärke von 0,17 mm aufgebracht. Nach Kalzination des Wabenkörpers bei 500°C für die Dauer von zwei Stunden in Luft wurde dem so hergestellten Vergleichskatalysator ein Bohrkern VK2 für die Testung in der Modellgasanlage entnommen und dessen Stickoxid-Umsatz untersucht.

Figur 1 zeigt das Ergebnis der Modellgasuntersuchung der nicht aktivierten homogenen Cer-Zirkon-Mischoxide als VK1 (○) und VK2 (□). Beide Materialien zeigen erwartungsgemäß keinen signifikanten Stickoxid-Umsatz in der SCR-Reaktion mit Ammoniak. Der für VK2 bei 250°C beobachtete Umsatz von 3,4 % liegt innerhalb der gegebenen Schwankung der Meßmethode.

**Vergleichsbeispiel 3:**

Um den Bezug zum Stand der Technik herzustellen wurde als Vergleichskatalysator ein kommerzieller SCR-Katalysator auf der Basis eines Eisen-ausgetauschten Zeolithen, aufgebracht auf einem Wabenkörper mit einem Volumen von 0,5 L und einer Zellzahl von 62 Zellen pro Quadratzentimeter bei einer Wandstärke von 0,17 mm hergestellt. Diesem Vergleichskatalysator wurde ein Bohrkern VK3 zur Testung in der Modellgasanlage entnommen und dessen Stickoxid-Umsatz im frisch hergestellten Zustand untersucht.

Ein weiterer Bohrkern, der dem Vergleichskatalysator entnommen wurde und im folgenden als VK3' bezeichnet wird, wurde einer synthetischen Alterung bei 650°C für die Dauer von 48 Stunden unterzogen. Die Alterung erfolgte in einem Ofen unter hydrothermalen Bedingungen in einer Atmosphäre bestehend aus 10 Vol.-% $O_2$ und 10 Vol.-% Sauerstoff in Luft.

**Vergleichsbeispiel 4:**

Als weiterer Bezugspunkt zum Stand der Technik wurde ein kommerzieller SCR-Katalysatoren auf der Basis von $V_2O_5/TiO_2/WO_3$ hergestellt, bestehend aus einer Beschichtung auf einem Wabenkörper mit einem Volumen von 0,5 L und einer Zellzahl von 62 Zellen pro Quadratzentimeter bei einer Wandstärke von 0,17 mm aufgebracht. Dem Vergleichskatalysator wurde ein Bohrkern VK4 zur Testung in der Modellgasanlage entnommen und dessen Stickoxid-Umsatz im frisch hergestellten Zustand untersucht.

Wie in Vergleichsbeispiel 3 wurde ein dem Vergleichskatalysator ein weiterer Bohrkern entnommen und bei 650°C für die Dauer von 48 h einer Atmosphäre bestehend aus 10 Vol.-% $O_2$ und 10 Vol.-% Sauerstoff in Luft ausgesetzt. Dieser Bohrkern wird im folgenden als VK4' bezeichnet.

**Vergleichsbeispiel 5:**

Ausgehend von der Publikation von Apostolescu et al in Appl. Catal. B: Environmental 62 (2006) 104, wurde ein weiterer Vergleichskatalysator hergestellt, dessen Beschichtung aus 1,4 Gew.-% Eisen und 7 Gew.-% Wolfram auf einem Zirkonoxid-Träger (Ceroxidfrei) bestand. Als Tragkörper für die Beschichtung wurde wie in den anderen Vergleichsbeispielen und Beispielen ein keramischer Wabenkörper mit einem Volumen von 0,5 L und einer Zellzahl von 62 Zellen pro Quadratzentimeter bei einer Wandstärke von 0,17 mm verwendet. Dem Vergleichskatalysator wurde ein Bohrkern VK5 zur Testung in der Modellgasanlage entnommen und dessen Stickoxid-Umsatz im frisch hergestellten Zustand untersucht.

Wie in Vergleichsbeispiel 4 wurde ein dem Vergleichskatalysator ein weiterer Bohrkern entnommen und bei 650°C für die Dauer von 48 h einer Atmosphäre bestehend aus 10 Vol.-% $O_2$ und 10 Vol.-% Sauerstoff in Luft ausgesetzt. Dieser Bohrkern wird im folgenden als VK5' bezeichnet.

**Vergleichsbeispiel** 6:

Die EP 1 736 232 A1 offenbart zwei verschiedene Herstellverfahren für SCR-Katalysatoren, die aus den Komponenten Wolframoxid, Ceroxid und Zirkonoxid aufgebaut sind. Absatz [0007] der genannten Schrift beschreibt einen für die Selektive katalytische Reduktion von Stickoxiden mit harnstoff gut geeigneten Katalysator, der durch Zugabe von Cer zu einem Wolframoxid-Zirkonoxid erhalten werde.

In diesem Vergleichsbeispiel wurde ein Vergleichskatalysator nach den Angaben in dieser Schrift hergestellt, wobei die Mengenverhältnisse der eingesetzten Komponenten so gewählt wurden, daß die Zusammensetzung des resultierenden Vergleichskatalysators in etwa der des in Beispiel 3 beschriebenen erfindungsgemäßen Katalysators entsprach. Es wurden also 420 g eines $ZrO_2/WO_3$-Gemisches (enthaltend 88 Gew.-% $ZrO_2$ und 12 Gew.-% $WO_3$,

bezogen auf das Gesamtgewicht der eingesetzten Mischung) in Wasser suspendiert. Unter ständigem Rühren wurde eine Cernitrat-Lösung enthaltend 202 g Cer zur Suspension hinzugegeben.

Mit der so erhaltenen Suspension wurde ein Wabenkörper mit einem Volumen von 0,5 L und einer Zellzahl von 62 Zellen pro Quadratzentimeter mit einer Zellwandstärke von 0,17 mm beschichtet. Nach Trocknung und Kalzination wurden dem Wabenkörper zwei Bohrkerne entnommen. An einem der Bohrkerne (VK6) wurde in der Modellgasanlage der Stickoxid-Umsatz des Katalysators im frisch hergestellten Zustand bestimmt.

Der zweite Bohrkern (VK6') wurde einer synthetischen Alterung bei 650°C über die Dauer von 48 Stunden in einer Atmosphäre bestehend aus 10 Vol.-% Sauerstoff und 10 Vol.-% Wasserdampf in Luft unterzogen und erst nach dieser Behandlung der Bestimmung des Stickoxid-Umsatzes in der Modellgasanlage zugeführt.

**Vergleichsbeispiel 7:**

Nach dem zweiten in der EP 1 736 232 A1 offenbarten Weg, SCR-Katalysatoren bestehend aus Wolframoxid, Ceroxid und Zirkonoxid herzustellen, wurde dieser Vergleichskatalysator hergestellt. Wie im Beispiel 3 der genannten Schrift beschrieben, wurde zunächst eine Cer-Zirkon-Mischverbindung aus wässriger Lösung ausgefällt und anschließend mit einer Wolfram-haltigen Lösung imprägniert.

Hierzu wurde eine wässrige Lösung enthaltend 500 g Zirkonylnitrat und 200 g Cer(III)nitrat (Kristallwasser-haltig) mit Ammoniak-Lösung neutralisiert, so daß es zur Ausfällung einer Cer/Zirkonoxid-hydroxid-Spezies kam. Zur erhaltenen Suspension wurde eine Lösung von 60 g Ammonium-metawolframat in Wasser unter ständigem Rühren hinzugegeben.

Mit der so erhaltenen Suspension wurde ein Wabenkörper mit einem Volumen von 0,5 L und einer Zellzahl von 62 Zellen pro Quadratzentimeter mit einer Zellwandstärke von 0,17 mm beschichtet. Nach Trocknung und Kalzination wurden dem Wabenkörper zwei Bohrkerne entnommen. An einem der Bohrkerne (VK7) wurde in der Modellgasanlage der Stickoxid-Umsatz des Katalysators in frisch hergestelltem Zustand bestimmt.

Der zweite Bohrkern (VK7') wurde einer synthetischen Alterung bei 650°C über die Dauer von 48 Stunden in einer Atmosphäre bestehend aus 10 Vol.-% Sauerstoff und 10 Vol.-% Wasserdampf in Luft unterzogen und erst nach dieser Behandlung der Bestimmung des Stickoxid-Umsatzes in der Modellgasanlage zugeführt.

**Beispiel 1 (nicht erfindungsgemäß):**

Dem Katalysator aus Vergleichsbeispiel 1 wurde ein Bohrkern entnommen und in einem Ofen über einem Zeitraum von 48 Stunden bei einer Temperatur von 350°C in einer Atmosphäre aus 10 Vol.-% Sauerstoff, 10 Vol.-% Wasser und 20 Vol.-ppm Schwefeldioxid in Stickstoff verschwefelt. Der so entstandene erfindungsgemäße Katalysator K1 wurde im Modellgas untersucht.

Figur 2 zeigt den Stickoxid-Umsatz des erfindungsgemäßen Katalysators K1 (●) im Vergleich zu den Stickoxid-Konvertierungen der nach dem Stand der Technik hergestellten Vergleichskatalysatoren VK3 (◊; Fe-Zeolith-basiert), VK4 (□; Vanadium-haltig) und VK5 (x, Fe/W/ZrO$_2$). Der erfindungsgemäße Katalysator K1 zeigt über den gesamten Temperaturbereich bessere Stickoxid-Umsätze in der SCR-Reaktion als der ebenfalls Zeolith- und Vanadium-freie Vergleichskatalysator nach dem Stand der Technik VK5. Im Temperaturbereich zwischen 300°C und 500°C werden außerdem überraschenderweise die Stickoxid-Konvertierungsleistungen von VK3, einem kommerziell erhältlichen, Fe-Zeolith-basierten Katalysator, übertroffen und die Konvertierungsleistungen des Vanadium-basierten Vergleichskatalysator VK4 annähernd erreicht.

**Beispiel 2 (nicht erfindungsgemäß):**

Dem Katalysator aus Vergleichsbeispiel 2 wurde ein Bohrkern entnommen und in einem Ofen über einem Zeitraum von 48 Stunden bei einer Temperatur von 350°C in einer Atmosphäre aus 10 Vol.-% Sauerstoff, 10 Vol.-% Wasser und 20 Vol.-ppm Schwefeldioxid in Stickstoff verschwefelt. Der so entstandene erfindungsgemäße Katalysator K2 wurde im Modellgas untersucht.

Figur 3 zeigt das Ergebnis der Untersuchung, ebenfalls im Vergleich zu den herkömmlichen SCR-Katalysatoren VK3 (◊; Fe-Zeolith-basiert), VK4 (□; Vanadium-haltig) und VK5 (x, Fe/W/ZrO$_2$). Auch der erfindungsgemäße Katalysator K2 übertrifft die Konvertierungsleistung von VK5 im gesamten Temperaturfenster und die Konvertierungsleistung des Fe-Zeolith-basierten Katalysators VK3 bei Temperaturen oberhalb von 300°C. Die Stickoxid-Umsatzleistung des Vanadium-basierten Vergleichskatalysators VK4 wird ab 350°C vollständig erreicht.

**Beispiel 3:**

Ein homogenes Cer-Zirkon-Mischoxid mit einem Ceroxid-Gehalt von 48 Gew.-%, bezogen auf seine Gesamtmenge, wurde durch Einbringen von Wolfram für die SCR-Reaktion aktiviert. Dazu wurde zunächst die Menge Wasser bestimmt, die vom homogenen Cer-Zirkon-Mischoxid aufgenommen werden kann, ohne daß das Material seine Rieselfähigkeit verliert. In der entsprechenden Menge Wasser wurde der Anteil einer gut wasserlöslichen Wolframverbindung gelöst, der 10 Gew.-% Wolfram bezogen auf das Gesamtgewicht des herzustellenden, aktivierten Cer-Zirkon-Oxids entsprach. Das homogene Cer-Zirkon-Oxid wurde mit der hergestellten wolframhaltigen Lösung porenfüllend imprägniert und anschließend zur thermischen Fixierung des Wolframs bei 500°C für die Dauer von 2 Stunden im Ofen an Luft gelagert.

Das so erhaltene aktivierte Cer-Zirkon-Mischoxid wurde in Wasser suspendiert, gemahlen und auf einen keramischen Wabenkörper mit einem Volumen von 0,5 L und einer Zellzahl von 62 Zellen pro Quadratzentimeter bei einer Wandstärke von 0,17 mm aufgebracht. Nach Kalzination des Wabenkörpers bei 500°C für die Dauer von zwei Stunden in Luft wurde dem so hergestellten erfindungsgemäßen Katalysator ein Bohrkern K3 für die Prüfung in der Modellgasanlage entnommen und dessen Stickoxid-Umsatz untersucht.

Figur 4 zeigt das Ergebnis der Untersuchung von K3 im Modellgas im Vergleich zu der Stickoxid-Konvertierungsleistung der herkömmlichen SCR-Katalysatoren VK3 (◊; Fe-Zeolith-basiert), VK4 (□;Vanadium-haltig) und VK5 (x, Fe/W/ZrO$_2$). K3 zeigt im gesamten Temperaturbreich eine Konvertierungsleistung, die der des Vanadium-basierten Katalysators VK4, der der leistungsstärkste der gewählten Vergleichskatalysatoren ist, im wesentlichen entspricht. Nur im Hochtemperaturmeßpunkt bei 500°C sind gegenüber dem Vanadium-basierten und dem Zeolith-basierten Vergleichskatalysator leichte Aktivitätseinbußen zu beobachten.

Figur 8 zeigt den Stickoxid-Umsatz des frisch hergestellten Katalysators K3 im Vergleich zu den beiden Vergleichskatalysatoren VK6 (*) und VK7 (Δ), die ebenfalls nur aus Ceroxid, Zirkonoxid und Wolframoxid zusammengesetzt sind, jedoch kein definiertes, homogenes Cer/Zirkon-Mischoxid enthalten, sondern günstigstenfalls, wie im Falle von VK7, eine inhomogene Mischspezies. Der erfindungsgemäße Katalysator zeigt eine erheblich bessere SCR-Aktivität im Temperaturbereich unterhalb von 300°C.

Die entscheidenden Vorteile des erfindungsgemäßen Katalysators gegenüber diesen Katalysatoren nach dem Stand der Technik zeigen sich besonders deutlich nach hydrothermaler Alterung.

Ein zweiter Bohrkern (K3') wurde bei 650°C für die Dauer von 48 Stunden einer Atmosphäre enthaltend 10 Vol.-% Sauerstoff und 10 Vol,-% Wasserdampf in Luft ausgesetzt. Nach dieser Behandlung wurde der Stickoxid-Umsatz an diesem Katalysator in der Modellgasanlage untersucht und das Ergebnis mit den Stickoxid-Umsätzen der ebenfalls gealterten Vergleichskatalysatoren VK6' (*) und VK7' (Δ) verglichen. Wie aus den in Figur 9 gezeigten Daten hervorgeht, nimmt die katalytische Leistung der Katalysatoren nach dem Stand der Technik durch die hydrothermale Alterung dramatisch ab. Konvertierungen von 50 % Stickoxid-Umsatz werden selbst bei Temperaturen oberhalb von 350°C nicht mehr überschritten. Im Unterschied dazu zeigt der erfindungsgemäße Katalysator K3' auch nach Alterung noch Stickoxid-Umsätze von ca. 80 % im Temperaturbereich oberhalb von 300°C.

**Beispiel 4:**

Ein homogenes Cer-Zirkon-Mischoxid mit einem Ceroxid-Gehalt von 86 Gew.-% und einem Lanthanoxid-Gehalt von 4 Gew.-%, bezogen auf seine Gesamtmenge, wurde durch Einbringen von Eisen und Wolfram für die SCR-Reaktion aktiviert. Dazu wurde zunächst die Menge Wasser bestimmt, die vom homogenen Cer-Zirkon-Mischoxid aufgenommen werden kann, ohne daß das Material seine Rieselfähigkeit verliert. In der entsprechenden Menge Wasser wurde der Anteil einer gut wasserlöslichen Eisen(III)-verbindung gelöst, der 1,3 Gew.-% Eisen entsprach, sowie der Anteil einer gut löslichen Wolframverbindung, der 10 Gew.-% Wolfram entsprach. (Die Gehaltsangaben bezogen sich auf das Gesamtgewicht des herzustellenden, aktivierten Cer-Zirkon-Mischoxids.) Das homogene Cer-Zirkon-Oxid wurde mit der eisen- und wolframhaltigen Lösung porenfüllend imprägniert und anschließend zur thermischen Fixierung der Übergangsmetalle bei 500°C für die Dauer von 2 Stunden im Ofen an Luft gelagert.

Das so erhaltene aktivierte Cer-Zirkon-Mischoxid wurde in Wasser suspendiert, gemahlen und auf einen keramischen Wabenkörper mit einem Volumen von 0,5 L und einer Zellzahl von 62 Zellen pro Quadratzentimeter bei einer Wandstärke von 0,17 mm aufgebracht. Nach Kalzination des Wabenkörpers bei 500°C für die Dauer von zwei Stunden in Luft wurde dem so hergestellten erfindungsgemäßen Katalysator ein Bohrkern K4 für die Testung in der Modellgasanlage entnommen und dessen Stickoxid-Umsatz untersucht.

Figur 5 zeigt das Ergebnis der Untersuchung von K4 im Modellgas im Vergleich zu der Stickoxid-Konvertierungsleistung der herkömmlichen SCR-Katalysatoren VK3 (◊; Fe-Zeolith-basiert), VK4 (□;Vanadium-haltig) und VK5 (x, Fe/W/ZrO$_2$). Im Temperaturbereich 150 bis 400°C zeigt K4 Stickoxid-Umsatzleistungen, die etwa denen des kommerziellen Vanadium-haltigen Katalysators VK4 entsprechen und deutlich über denen der Vanadium-freien Vergleichskatalysatoren VK3 und VK5 liegen. Der Rückgang des Stickoxid-Umsatzes oberhalb ab 450°C resultiert aus einem Selektivitätsverlust, der durch die bei hohen Temperaturen eintretende Überoxidation von Ammoniak zustande kommt.

**Beispiel 5:**

Entsprechend dem in Beispiel 4 beschriebenen Vorgehen wurden ein weiteres aktiviertes Cer-Zirkon-Mischoxid und ein weiterer erfindungsgemäßer Katalysator hergestellt, wobei als Grundstoff ein homogenes Cer-Zirkon-Mischoxid eingesetzt wurde, das 48 Gew.-% Ceroxid bezogen auf das Gesamtgewicht des homogenen Cer-Zirkon-Mischoxids enthielt. Aus dem erhaltenen Katalysator wurden zwei Bohrkerne mit einem Duchrmesser von 25,4 mm und einer Länge von 76,2 mm entnommen. Einer der Bohrkerne (K5) wurde in frisch hergestelltem Zustand der Untersuchung der SCR-Aktivität unterzogen.

Der zweite Bohrkerne (K5') wurde zunächst bei 650°C für die Dauer von 48 Stunden in einer Atmosphäre bestehend aus 10 Vol.-% $O_2$ und 10 Vol.-% Sauerstoff in Luft gealtert. Anschließend wurde auch der Stickoxid-Umsatz dieses Bohrkerns im Modellgas untersucht.

Figur 6 zeigt das Ergebnis der Bestimmungen der Stickoxid-Umsätze von K5 (frisch hergestellt) und K5' (hydrothermal gealtert) im Vergleich zu den ebenfalls hydrothermal gealterten Vergleichskatalysatoren VK3' (◊; Fe-Zeolith-basiert), VK4' (□;Vanadium-haltig) und VK5' (x, Fe/W/$ZrO_2$). Es wird deutlich, daß der erfindungsgemäße Katalysator K5 im Frischzustand eine hervorragende Stickoxid-Konvertierungsleistung insbesondere im Temperaturbereich 150 bis 400°C zeigt. Der Rückgang des Stickoxid-Umsatzes ab 450°C resultiert - wie auch bei K4 - aus der Überoxidation von Ammoniak.

Der Vergleich der Leistung des hydrothermal gealterten Bohrkerns K5' mit der Konvertierungsleistung der hydrothermal gealterten kommerziellen Katalysatoren belegt außerdem eine exzellente Alterungsstabilität des erfindungsgemäßen Katalysators.

**Beispiel 6:**

Aus dem in Beispiel 5 hergestellten Katalysator wurde ein weiterer Bohrkern entnommen und in einem Ofen bei 350°C über einem Zeitraum von 48 Stunden in einer Atmosphäre aus 10 Vol.-% Sauerstoff und 20 Vol.-ppm Schwefeldioxid in Stickstoff verschwefelt. Der so entstandene erfindungsgemäße Katalysator K6, der durch Einbringen von Wolfram, Eisen und Schwefel aktiviertes Cer-Zirkon-Mischoxid enthält, wurde im Modellgas untersucht.

Figur 7 zeigt das Ergebnis der Aktivitätsuntersuchung im Vergleich zu den herkömmlichen SCR-Katalysatoren VK3 (◊; Fe-Zeolith-basiert), VK4 (□;Vanadium-haltig) und VK5 (x, Fe/W/$ZrO_2$). K6 zeigt im Temperaturbereich zwischen 300 und 450°C hervorragende Stickoxid-Konvertierungsleistungen. Die Stickoxid-Umsätze im Tieftemperaturbereich sind mit denen des Zeolith-basierten Vergleichskatalysators VK3 durchaus vergleichbar. Mit K6 liegt ein weiteres Beispiel für einen erfindungsgemäßen Katalysator vor, das sich durch hervorragende Konvertierungsleistungen in der SCR-Reaktion mit Ammoniak auszeichnet.

Alle Beispiele zeigen, daß durch gezieltes Einbringen von Schwefel und/oder Übergangsmetall in ein homogenes Cer-Zirkon-Mischoxid eine äußerst effektive Aktivierung des Materials für die SCR-Reaktion von Stickoxiden mit Ammoniak erfolgt und sich die entsprechend hergestellten Katalysatoren als Alternative zu den herkömmlichen Zeolith-oder/und Vanadium-basierten Standardtechnologien eignen.

**Patentansprüche**

1.   Verfahren zur Herstellung eines katalytisch aktiven Materials für die selektive katalytische Reduktion von Stickoxiden mit Ammoniak durch Imprägnierung eines homogenen Cer-Zirkon-Mischoxids, welches 10 bis 90 Gew.-% Ceroxid bezogen auf das Gesamtgewicht des homogenen Cer-Zirkon-Mischoxids enthält, mit einer wässrigen Lösung einer Verbindung eines Übergangsmetalls ausgewählt aus der Gruppe bestehend aus Chrom, Molybdän, Wolfram oder Mischungen davon, wobei die Lösungsmenge so gewählt wird, dass das Cer-Zirkon-Mischoxidpulver porenfüllend befeuchtet wird, seine Rieselfähigkeit jedoch behält, und anschließende Trocknung des Pulvers bei 300 bis 700°C an Luft über die Dauer von 0,5 bis 5 Stunden, wobei das Übergangsmetall im Cer-Zirkon-Mischoxid thermisch fixiert wird, und wobei der Vorgang des Imprägnierens gegebenenfalls wiederholt wird, bis im derart hergestellten Cer-Zirkon-Mischoxid nach Trocknung 2 bis 20 Gew.-% von Chrom, Molybdän, Wolfram oder Mischungen davon bezogen auf das Gesamtgewicht des aktivierten Cer-Zirkon-Mischoxids enthalten sind, wobei unter einem homogenen Cer-Zirkon-Mischoxid ein oxidisches, festes Pulvermaterial verstanden wird, welches wenigstens aus den zwei Komponenten Ceroxid und Zirkonoxid besteht und wobei die Komponenten eine Mischung auf atomarer Ebene bilden.

2.   Verfahren nach Anspruch 1,
**dadurch gekennzeichnet,**
**daß** in der wässrigen Lösung zusätzlich Übergangsmetall ausgewählt aus der Gruppe bestehend aus Mangan, Eisen, Cobalt, Nickel, Kupfer, Ruthenium, Rhodium, Palladium, Silber, Iridium, Platin oder Gold oder Mischungen davon als Promoter enthalten ist.

3. Verfahren nach Anspruch 1 oder 2,
   **dadurch gekennzeichnet,**
   **dass** in das gemäß Anspruch 1 oder 2 hergestellte katalytisch aktive Material durch Behandlung mit $SO_2$ und sauerstoffhaltiger Gasmischung oder durch Behandlung mit verdünnter Schwefelsäure und anschließende Trocknung Schwefel eingebracht wird.

4. Verfahren nach Anspruch 1 oder 2,
   **dadurch gekennzeichnet,**
   **dass** in das Cer-Zirkon-Mischoxid vor Imprägnierung nach Anspruch 1 oder 2 durch Behandlung mit $SO_2$ und sauerstoffhaltiger Gasmischung oder durch Behandlung mit verdünnter Schwefelsäure und anschließende Trocknung Schwefel eingebracht wird.

5. Verfahren nach Anspruch 3 oder 4,
   **dadurch gekennzeichnet,**
   **dass** die Behandlung mit einer Gasmischung enthaltend 0,15 bis 15 Vol.-% Sauerstoff und 5 bis 50000 ppm Schwefeldioxid bei Temperaturen zwischen 150 und 800°C erfolgt.

6. Verfahren nach Anspruch 3 oder 4,
   **dadurch gekennzeichnet,**
   **dass** die Behandlung mit verdünnter Schwefelsäure bei Raumtemperatur oder leicht erhöhter Temperatur bis 80°C erfolgt.

7. Verfahren nach einem der Ansprüche 1 bis 6,
   **dadurch gekennzeichnet,**
   **dass** als Ausgangsmaterial ein homogenes Cer-Zirkon-Mischoxid mit einer BET-Oberfläche von mehr als 50 $m^2/g$ und einem Cer(IV)-oxid-Gehalt von 40 bis 90 Gew.-% eingesetzt wird.

8. Verfahren nach Anspruch 7,
   **dadurch gekennzeichnet,**
   **dass** das als Ausgangsmaterial eingesetzte Cer-Zirkon-Mischoxid mit Selten-Erd-Metallen dotiert ist und 1 bis 9 Gew.-% Selten-Erd-Oxid, bezogen auf das Gesamtgewicht des homogenen Cer-Zirkon-Mischoxids, enthält, wobei das Selten-Erd-Metall ausgewählt ist aus der Gruppe bestehend aus Scandium, Yttrium, Lanthan, Praseodym, Neodym, Samarium, Europium, Gadolinium oder Mischungen davon.

9. Katalytisch aktives Material erhältlich durch das Verfahren nach Anspruch 7 oder 8 enthaltend 0,01 bis 5 Gew.-% Schwefel, jeweils bezogen auf das Gesamtgewicht des Cer-Zirkon-Mischoxids.

10. Katalytisch aktives Material nach Anspruch 9, welches außerdem 0,1 bis 10 Gew.- % eines Übergangsmetalls ausgewählt aus der Gruppe Mangan, Eisen, Cobalt, Nickel, Kupfer, Ruthenium, Rhodium, Palladium, Silber, Iridium, Platin, Gold oder Mischungen davon enthält.

11. Katalytisch aktives Material nach Anspruch 10 enthaltend 0,02 - 3 Gew.-% Schwefel und/oder 5 bis 15 Gew.-% Molybdän oder Wolfram und 0,5 bis 3 Gew.-% Eisen oder Kupfer, jeweils bezogen auf dessen Gesamtgewicht.

**Claims**

1. Method for the production of a catalytically active material for the selective catalytic reduction of nitrogen oxides with ammonia by impregnation of a homogeneous cerium-zirconium mixed oxide which comprises 10 to 90 wt.% cerium oxide based on the total weight of the homogeneous cerium-zirconium mixed oxide, with an aqueous solution of a compound of a transition metal selected from the group consisting of chromium, molybdenum, tungsten or mixtures thereof, wherein the amount of solution is selected such that the cerium-zirconium mixed oxide powder is wetted thereby filling the pores but its flowability is maintained, and then drying of the powder at 300 to 700 °C in air for the duration of 0.5 to 5 hours, wherein the transition metal in the cerium-zirconium mixed oxide is thermally fixed, and wherein the process of impregnation is repeated if required, until the cerium-zirconium mixed oxide produced in this way after drying contains 2 to 20 wt.% of chromium, molybdenum, tungsten or mixtures thereof based on the total weight of the activated cerium-zirconium mixed oxide, wherein a homogeneous cerium-zirconium mixed oxide is understood to mean an oxidic, solid powder material, consisting at least of the two components ceria and zirconia and wherein the components form a mixture at the atomic level.

2. Method according to Claim 1,
   **characterized in that**
   in addition, transition metal selected from the group consisting of manganese, iron, cobalt, nickel, copper, ruthenium, rhodium, palladium, silver, iridium, platinum or gold or mixtures thereof is contained in the aqueous solution as a promoter.

3. Method according to Claims 1 or 2,
   **characterized in that**
   sulfur is introduced into the catalytically active material prepared according to Claims 1 or 2 by treatment with $SO_2$ and oxygen-containing gas mixture or by treatment with dilute sulfuric acid and subsequent drying.

4. Method according to Claims 1 or 2,
   **characterized in that**
   sulfur is introduced into the cerium-zirconium mixed oxide before impregnation according to Claims 1 or 2 by treatment with $SO_2$ and oxygen-containing gas mixture or by treatment with dilute sulfuric acid and subsequent drying.

5. Method according to Claims 3 or 4,
   **characterized in that**
   the treatment with a gas mixture comprising 0.15 to 15 % by volume of oxygen and 5 to 50 000 ppm of sulfur dioxide takes place at temperatures between 150 and 800 °C.

6. Method according to Claims 3 or 4,
   **characterized in that**
   the treatment is carried out with dilute sulfuric acid at room temperature or slightly elevated temperature up to 80 °C.

7. Method according to any one of Claims 1 to 6,
   **characterized in that**
   a homogeneous cerium-zirconium mixed oxide having a BET surface area of more than 50 $m^2$/g and a cerium (IV) oxide content of 40 to 90 wt.% is used as the starting material.

8. Method according to Claim 7,
   **characterized in that**
   the cerium-zirconium mixed oxide used as starting material is doped with rare earth metals and contains 1 to 9 wt.% rare earth oxide, based on the total weight of the homogeneous cerium-zirconium mixed oxide, wherein the rare earth metal is selected from the group consisting of scandium, yttrium, lanthanum, praseodymium, neodymium, samarium, europium, gadolinium or mixtures thereof.

9. Catalytically active material obtainable by the method according to Claims 7 or 8 and containing from 0.01 to 5 wt.% sulfur, based in each case on the total weight of the cerium-zirconium mixed oxide.

10. Catalytically active material according to Claim 9, which additionally comprises 0.1 to 10 wt.% of a transition metal selected from the group manganese, iron, cobalt, nickel, copper, ruthenium, rhodium, palladium, silver, iridium, platinum, gold or mixtures thereof.

11. Catalytically active material according to Claim 10 containing 0.02 - 3 wt.% sulfur and/or 5 to 15 wt.% molybdenum or tungsten and 0.5 to 3 wt.% iron or copper, based in each case on the total weight thereof.

**Revendications**

1. Procédé de fabrication d'un matériau actif catalytique pour la réduction catalytique sélective d'oxydes d'azote avec de l'ammoniac par imprégnation d'un oxyde mixte homogène de cérium et de zircon contenant 10 à 90 % en poids d'oxyde de cérium par rapport au poids total de l'oxyde mixte homogène de cérium et de zircon, avec un composé d'un métal de transition en solution aqueuse sélectionné dans le groupe constitué par le chrome, le molybdène, le tungstène ou des mélanges de ceux-ci, la quantité de solution pour humidifier la poudre d'oxyde mixte de cérium et de zircon étant choisie de manière à agir comme remplisseuse de pores tout en permettant à la poudre de conserver sa capacité d'écoulement, et pour le séchage consécutif de la poudre à l'air, à une température comprise entre 300 et 700° C pour une durée de 0,5 à 5 heure-s, au cours duquel le métal de transition est fixé thermiquement dans l'oxyde mixte de cérium et de zircon, et où le processus d'imprégnation est répété si nécessaire jusqu'à ce que l'oxyde mixte de cérium et de zircon ainsi fabriqué contienne, après séchage, 2 à 20 % en poids de chrome, de molybdène, de tungstène ou de mélanges de ceux-ci par rapport au poids total de l'oxyde mixte de cérium et de zircon activé, sachant que par oxyde mixte homogène de cérium et de zircon, on entend une poudre solide et oxydique comprenant au moins les deux composants cérium et zircon, et où les composants forment un mélange au niveau atomique.

2. Procédé selon la revendication 1,
**caractérisé en ce que**
la solution aqueuse contient par ailleurs un métal de transition faisant office de promoteur, sélectionné dans le groupe constitué par le manganèse, le fer, le cobalt, le nickel, le cuivre, le ruthénium, le rhodium, le palladium, l'argent, l'iridium, le platine ou l'or, ou des mélanges de ceux-ci.

3. Procédé selon la revendication 1 ou 2,
**caractérisé en ce que**
dans le matériau actif catalytique fabriqué conformément à la revendication 1 ou 2, du soufre est introduit par traitement avec du $SO_2$ et un mélange gazeux contenant de l'oxygène,
ou par traitement avec de l'acide sulfurique dilué et séchage consécutif.

4. Procédé selon la revendication 1 ou 2,
**caractérisé en ce que**
dans l'oxyde mixte de cérium et de zircon avant imprégnation selon la revendication 1 ou 2, du soufre est introduit par traitement avec du $SO_2$ et un mélange gazeux contenant de l'oxygène ou par traitement avec de l'acide sulfurique dilué et séchage consécutif.

5. Procédé selon la revendication 3 ou 4,
**caractérisé en ce que**
le traitement avec un mélange gazeux contenant 0,15 à 15 % en volume d'oxygène et 5 à 50 000 ppm de dioxyde de soufre a lieu à des températures comprises entre 150 et 800° C.

6. Procédé selon la revendication 3 ou 4,
**caractérisé en ce que**
le traitement avec de l'acide sulfurique dilué a lieu à température ambiante ou à une température légèrement supérieure, pouvant aller jusqu'à 80° C.

7. Procédé selon l'une des revendications 1 à 6,
**caractérisé en ce qu'**il
est utilisé comme matériau de départ, un oxyde mixte homogène de cérium et de zircon ayant une surface BET supérieure à 50 $m^2$/g et une teneur en oxyde de cérium(IV) de 40 à 90 en pourcentage pondéral.

8. Procédé selon la revendication 7,
**caractérisé en ce que**
l'oxyde mixte de cérium et de zircon utilisé comme matériau de départ est doté de métaux des terres rares et contient 1 à 9 % en poids d'oxyde de terres rares rapporté au poids total de l'oxyde mixte homogène de cérium et de zircon, sachant que le métal des terres rares est sélectionné dans le groupe constitué par le scandium, l'yttrium, le lanthane, le praséodyme, le néodyme, le samarium, l'europium, le gadolinium ou des mélanges de ceux-ci.

9. Matériau actif catalytique pouvant être obtenu par le procédé selon la revendication 7 ou 8, contenant 0,01 à 5 % en poids de soufre, respectivement rapporté au poids total de l'oxyde mixte de cérium et de zircon.

10. Matériau actif catalytique selon la revendication 9, qui contient en outre 0,1 à 10 % en poids d'un métal de transition sélectionné dans le groupe constitué par le manganèse, le fer, le cobalt, le nickel, le cuivre, le ruthénium, le rhodium, le palladium, l'argent, l'iridium, le platine, l'or ou des mélanges de ceux-ci.

**11.** Matériau actif catalytique selon la revendication 10, contenant 0,02 à 3 % en poids de soufre et/ou 5 à 15 % en poids de molybdène ou de tungstène, et 0,5 à 3 % en poids de fer ou de cuivre, par rapport à leur poids total respectif.

**Figur 1**

**Figur 2**

**Figur 3**

**Figur4**

**Figur 5**

**Figur 6**

Figur 7

Figur 8

**Figur 9**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 4961917 A
- EP 1495804 A1
- US 6914026 B2
- EP 1147801 B1
- EP 0385164 B1
- EP 1153648 A1
- EP 0246859 A
- US 4798817 A
- US 4780445 A
- JP 2005238195 A
- EP 1736232 A
- EP 1736232 A1

**In der Beschreibung aufgeführte Nicht-Patentliteratur**

- **APOSTOLESCU et al.** *Appl. Catal. B: Environmental,* 2006, vol. 62
- **APOSTOLESCU et al.** *Appl. Catal. B: Environmental,* 2006, vol. 62, 104